Europäisches Patentamt

European Patent Office

Office européen des brevets

(19)

(11) Publication number: **0 176 275**
**B1**

(12) **EUROPEAN PATENT SPECIFICATION**

(45) Date of publication of patent specification: **20.01.88**

(21) Application number: **85306332.9**

(22) Date of filing: **05.09.85**

(51) Int. Cl.⁴: **F 28 F 9/14, F 16 L 41/00,**
**F 16 L 41/08**

(54) **Compression sealing of shell and tube heat exchangers.**

(30) Priority: **05.09.84 US 647584**

(43) Date of publication of application:
**02.04.86 Bulletin 86/14**

(45) Publication of the grant of the patent:
**20.01.88 Bulletin 88/03**

(84) Designated Contracting States:
**AT BE CH DE FR GB IT LI LU NL SE**

(56) References cited:
**EP-A-0 117 821**
**WO-A-84/02180**
**CH-A- 335 307**
**CH-A- 467 987**
**FR-A-1 537 988**
**FR-A-2 031 669**
**GB-A-1 604 180**
**US-A-1 558 205**
**US-A-1 575 497**
**US-A-2 859 948**
**US-A-4 421 160**

**KONSTRUKTIONSBÜCHER, vol. 17, 1975,**
**pages 76-83, 110-111, Springer-Verlag, Berlin,**
**DE; K. TRUTNOVSKY: "Berührungsdichtungen**
**an ruhenden und bewegten Maschinenteilen"**

(73) Proprietor: **BALTIMORE AIRCOIL COMPANY,**
**INC.**
**Montevideo Road**
**Jessup, Maryland 20 794 (US)**

(72) Inventor: **Flamm, Katherine K.**
**1504 Ivanhoe Avenue**
**Baltimore Maryland 21228 (US)**
Inventor: **Geary, David F.**
**323 Tunstall Court**
**Severna Park Maryland 21146 (US)**
Inventor: **Gilley, J. Kyle**
**9118 Bronze Bell**
**Columbia Maryland 21045 (US)**
Inventor: **Schinner, Edward N.**
**6615 Blackwatch Lane**
**Highland Maryland 20777 (US)**

(74) Representative: **Boyes, Kenneth Aubrey et al**
**Frank B. Dehn & Co. Imperial House 15-19**
**Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method for sealing shell and tube heat exchangers so that the fluid, flowing on the outside of tubes (hereinafter referred to as shell side) and the inside of the tubes (hereinafter referred to as tube side) is not intermingled.

In the past there have been a number of devices and sealing means used to seal the tubes and shells in tube and shell heat exchangers from each other so that fluid flowing in the two parts would not intermingle.

Typically, brazing, welding or roller-expansion methods have been used to seal the joints between the tubes and tube sheet and between the tube sheet and shell in a typical shell and tube heat exchanger. Among the disadvantages of these sealing methods are that 1) the individual tubes cannot be easily removed, 2) the shell side cannot be cleaned mechanically, and 3) any plastic baffles used in the shell may melt during brazing or welding.

Other methods have been used to compression seal the joints between the tubes and the tube sheet, and the joints between the tube sheets and the shell in a typical shell and tube heat exchanger, however none of these prior methods controlled or limited the amount of compression applied to the gaskets, and there were several disadvantages to these previous methods of compression sealing. One method required the compressioning tube sheet to be welded to the shell. This prevented access to the internal shell area for a cleaning or replacement of tube support baffles and allowed tubes to be replaced only singly and by very complicated procedures. Several methods required the pressure of internal welded lugs or tube sheet end stops which complicated the removal of tube support assemblies and prevented the use of conventional tube support baffles. Another method required the presence of removable pressure-transfer devices in place of welded lugs and these components obstructed the flow in and out of the shell and tube nozzles causing wasted energy due to excessive pressure losses. Another method required the use of very close tolerance components to effectively seal the shell wall end section of the shell component.

It is known to use compressible gaskets, however this method also suffers from the disadvantage that the degree of compressive force of the gaskets can not be precisely controlled. Too little or too much compression force can cause the seals to fail with the development of leaks. The only control is by means of the torque applied to the bolts, which has to be within a specified range. This necessitates a tedious assembly process to prevent failure of the seals. In addition, this method could lead to a bulging deformation of the outer edges of the rubber gaskets, particularly under high compressive forces. This commonly results in the use of extended containment straps to attempt to minimize the bulging deformation of the rubber gaskets. An example of such a heat exchanger is shown in EP—A—0117821 which discloses the preamble of claim 1. This document has been published on 5.9.84.

The present invention is characterised in that a relatively incompressible tube sheet gasket retainer is provided in circumferential arrangement around said tube sheet gasket, and in that a flange gasket retainer is provided in circumferential arrangement around each said flange gasket adjacent to the shell flange and extension shell flange, respectively, the tube sheet gasket and flange gaskets being thicker than the respective tube sheet gasket retainer and flange gasket retainers whereby upon application of a compressive force the flange gaskets are compressed and radially expanded by an amount limited to the radial inner dimension of the flange gasket retainers and the tube sheet gasket is compressed and radially expanded by an amount limited to the radial inner dimension of the tube sheet gasket retainer so that said gaskets seal the tubes from the shell of the shell and tube heat exchanger and the shell and the extension shell from each other and from the atmosphere.

An embodiment of the invention will now be described by way of example with reference to the accompanying drawings in which:—

Figure 1 is an isometric cut-away view of the sealing means on one end of a shell and tube heat exchanger;

Figure 2 shows a cross-sectional view of the sealing means when assembled.

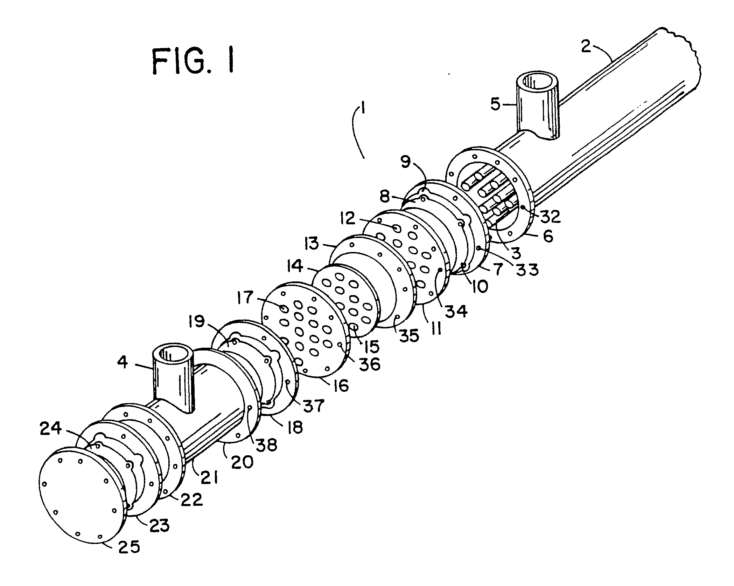

Referring first to Figure 1, there is shown a shell and tube heat exchanger 1 consisting of a shell 2 and a plurality of tubes 3 located within the shell, preferably in a symmetrical or evenly-spaced pattern within the shell 2. Any fluid flowing within the tubes 3 enters the tubes or leaves the tubes through a conduit tube side connection 4. Fluid flowing outside the tubes but within the shell 2 enters or leaves the shell and tube heat exchanger 1 through the shell side conduit connection 5. Only one side or one end of the shell and tube heat exchanger is shown in Figure 1, but the sealing means could similarly be fitted to the other end of the shell and tube heat exchanger which is not shown.

There is provided a flange portion 6 on the end of the shell 2. This flange portion is usually welded onto the outside end of the shell. Adjacent to the flange 6 is a flange gasket retainer 7 surrounding an annular flange gasket 8. The flange gasket fits against the inner portion of the face of flange 6 so that the tubes 3 can pass through the flange. The flange gasket retainer is made of relatively incompressible material and fits against the outer portion of the face of flange 6 not occupied by the flange gasket. The flange gasket retainer may have indentations 9 with matching protrusions 10 on the flange gasket to facilitate alignment during assembly.

Adjacent the flange gasket retainer 7 and the flange gasket 8 is a tube sheet 11. The tube sheet is made of any rigid material such as steel, brass, or stainless steel or it can be made of other materials such as plastics or reinforced plastics. The tube sheet 11 is of a preferably circular design and has individual holes 12 corresponding to and in alignment with the individual tubes 3, the holes being of a slightly larger diameter than the outer diameter of the tubes 3 so that the tube-ends can pass through the holes, and the tube sheets can exert a precisely controlled force to compress the tube sheet gasket 14 to the proper extent to prevent tube seal leaks. However the holes for the tubes 3 should not be so large as to prevent the formation of an effective seal by the tube sheet gasket 14 upon the compression by the tube sheet 11 and 16.

Adjacent to the tube sheet 11 is a relatively incompressible tube sheet gasket retainer 13 surrounding a tube sheet gasket 14. This gasket is circular and is solid-faced except for individual holes 15 therein, these holes also line up with the tubes 3 as well as tube sheet holes 12 and 17. The diameter of these holes 15 can be slightly smaller than the outside diameters of the tubes 13 in order to maximize the gasket compressive sealing force.

Next to the gasket 14 is another tube sheet 16 with holes 17 therein, similar to those described for metal tube sheet 11.

Adjacent to the tube sheet 16 is another flange gasket retainer 18 and flange gasket 19 which fits against the annular circular flange 20. Flange gasket retainer 18 and flange gasket 19 are similar to flange gasket retainer 7 and flange gasket 8 previously described. The entire series of flange gaskets and metal tube sheets are then adjacent to flange 20 which is located at the end of extension shell 21.

Extension shell 21 is an extension or continuation of shell 2 and is fitted with a tube side connection 4 through which fluid flowing within the tubes enters or leaves. Extension shell 21 is also preferably fitted with flange 22 on its other closure end (when contrasted with flange 20) so that the extension shell 21 of the shell 2 can be sealed off from the outside atmosphere. This is accomplished by forming end closure flange 22 as part of the extension shell 21 and having adjacent to flange 22, an annular flange gasket retainer 23 and flange gasket 24 similar to gasket retainers 7 and 18 and gaskets 8 and 19 and finally having an end plate or end closure 25 sealing the end of the extension shell 21 of the shell and tube heat exchanger 1.

In a further embodiment the gaskets and their respective retainers, both flange and tube sheet, can be of unitary construction with an outer portion of relatively incompressible material and an inner compressible section. The unitary gasket and retainer would be made with a thicker gasket section as is discussed below. The gasket and retainer sections of the unitary device could be made of like materials by varying the density during manufacture, or the device could be made of unlike materials which could be bonded together using various bonding techniques or the gasket and retainer sections of the unitary device could be molded in an integral fashion. Such a unitary device would ensure that there would be no gap between the gasket and retainer to absorb the compression deformation of the gasket.

In each of the paired concentric gaskets and gasket retainers, or unitary gasket and retainer, the gasket is of a thickness which is greater than that of the surrounding gasket retainer. In addition, the outer surfaces of the gaskets are closely matched in size to the inner surfaces of the gasket retainers to ensure that the sealing forces of the gasket, achieved upon the compression of the gaskets through the application of the bolting compressive forces to the assembly, will be directed inwardly in the case of the flange gaskets 8, 19 and 24 and circumferentially around the tubes 3, in the case of the tube sheet gasket 14. A close fit of the outer surface of the gasket within the gasket retainer will help to ensure that the deformation of the gasket will be properly directed upon the application of the compressive forces.

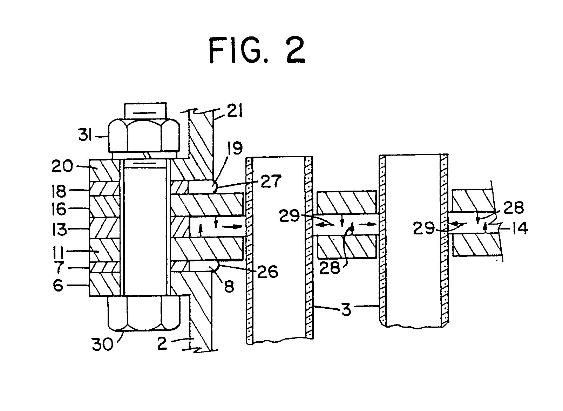

As can be seen in Figure 2, when one draws flange 6 and flange 20 closer together to thus compress the two flange gaskets 8 and 19 the compression will cause the gasket to expand radially inward thus causing a slight bulging deformation of the gasket as seen in 26 and 27. When the tube sheet gasket 14 is compressed by the application of the compressive force by the tube sheets 11 and 16 the deformation thus caused is constrained in all directions. This results in the application of a sealing force directed radially inward on each of the tubes 3. This is illustrated in Figure 2 wherein the compressive forces are represented by vertical arrows 28 and the sealing forces are represented by arrows 29.

When the bolt 30 and the nut 31 are tightened causing the application of the compressive force to everything between the flanges 6 and 20 the distance the flange 6 and 20 can travel towards each other is limited since all of the flange gasket retainers 7 and 18, the tube sheets 11 and 16 and the tube sheet gasket retainer 13 are all made of relatively incompressible materials. Thus, when the bolt 30 and nut 31 are tightened to the extent shown in Figure 2, the application of additional torque to the nut and bolt assembly will not cause any additional forces to be applied to the flange gaskets 8 and 19 and the tube sheet gasket 14. This prevents the application of excess forces to the various gaskets which would result in excess distortion of such gaskets and the failure of the seals. This also facilitates the assembly of the apparatus since the time consuming use of special torque wrenches to accurately control the degree of compression of the gaskets is not required.

The magnitude of the compressive forces 28 and the resultant sealing forces 29 is determined by controlling the relative thickness of the tube sheet gasket 14 with respect to the tube sheet gasket retainer 13. Generally the gasket retainer is from 10 to 90% of the thickness of the respective gasket. Preferably the gasket retainer is from 50 to 70% of the thickness of the respective gasket. For a very large heat exchanger with larger diameters or number of tubes 3, a thicker tube sheet gasket relative to the retainer may be desired.

The ability of the gasket to deform upon the application of the compressive forces 28 and thus to apply the sealing forces 29 is determined by the flexibility of the gasket material. The deformability of rubber is determined by its durometer rating. A durometer rating of from 20 to 80 is desirable since if the rubber or other gasket material is too hard the compression forces will not be able to deform the gasket sufficiently to effect a proper seal. If the rubber or other gasket material is too soft, the seal which is formed will not be able to withstand the pressure exerted upon it by the pressure of the heat exchange liquid in the apparatus. The preferred durometer rating for the tube sheet gasket 14 is from 40 to 50 and the preferred durometer rating of the flange gaskets 8 and 19 is from 55 to 65. Where the tube sheet or flange gasket retainers are to be made of a non-metallic material, they preferably should be made of a material with a durometer rating in excess of 80.

The flange gaskets 8 and 19, the tube sheet gasket 14 flange gasket 24 and optionally the gasket retainers, can be made of any sealable and flexible material particularly rubber or any type of elastomeric material which would not tend to corrode or decompose in the presence of the fluid used in the shell and tube heat exchangers. The elastomeric materials would be made of different levels of hardness to suit particular purposes as was discussed above. Another modification of the flange gasket is to provide shaped protrusions which encompasss a mounting hole. This arrangement facilitates the assembly of the unit by allowing the gasket to be retained in position during such assembly. Generally 2 to 4 such protrusions are adequate.

The tube sheet 11, 16 and end closure 25 are made of non-compressible material and preferably of metal such as steel, brass or stainless steel. The entire sealing means is compressed by any means but particularly by the use of bolts 30 which fit through holes 32 in the flange 6 and correspondingly fit through singly aligned holes 33 in flange gasket retainer 7, holes 34 in the tube sheet 11 or holes 35 in the tube sheet gasket retainer 13, holes 36 in the tube sheet 16, holes 37 in the flange gasket retainer 18 and finally holes 38 in the flange 20. Once the bolt extends through the holes 38 in flange 20, nuts 31 can be screwed onto the threaded portion of bolts 30 and the entire assembly tightened to thus force the flanges and tube sheets to compress the flange gaskets 8 and 19 and tube sheet gasket 14 and thus effectively seal the shell and tube heat exchanger.

Similarly, the end of the extension shell 21 can be sealed from the atmosphere by means of compressing the end closure 25 to flange 22 and flange gasket retainer 23 to thus compress the flange gasket 24. Removal of end closure 25 will permit the mechanical cleaning of the interior of tubes without removing or disturbing the tube compression seals or any external piping connections. The holes through which the bolts pass can be equally spaced around the entire annulus of the flanges which extend above the outer diameter of the shell 2 and shell extension 21. Typically there would be about 20 holes of about 1.25 cm ($\frac{1}{2}$ inch) diameter on a flange attached to a 20 cm (8 inch) diameter shell.

This arrangement of gaskets within gasket retainers, which prevents outward distortion of the gaskets, also allow for shell and tube heat exchangers to be constructed for use with higher internal pressure duties. Indeed, this arrangement can be employed to increase the range of application to considerably higher internal design pressures than that possible with some older designs wherein gaskets extended to the full diameter of the flange. By tightening bolt 30 with nut 31 the assembly closes to prevent any exposure of the gaskets and to completely seal all gaskets within a contained chamber and away from all atmospheric effects. This allows for a much wider range of internal pressure duties.

It is preferred that flanges 6 and 20, flange retainers 7 and 18, tube sheets 11 and 16, tube sheet gasket retainer 13 and gaskets 8, 14 and 17 are circular, however they may have an outer periphery of square, hexagonal or other non-circular configuration, while retaining preferably circular-shaped internal holes, shell and extension shell. Also, it is possible to have non-circular tubes and gasket holes. Non-circular elements may result in reduced manufacturing cost or reduced material scrap ratios when fabricating multiples of components such as flanges, gaskets or tube sheets by conventional high speed manufacturing methods.

While the outer shell end closure 25, gasket 24, flange 22 and gasket retainer 23 assembled using nuts and bolts represent the preferred mechanical arrangement to allow the most ideal accessibility for maintenance and repair or reassembly of all internal components, an alternative variation, potentially of lower cost, employing a welded end cap to completely close the outer end of the extension shell 21 may be employed to perform the required closure of the outer end of the extension shell 21, eliminating the need for flange 22, gasket 24 flange gasket retainer 23 and utilizing an end closure without holes, by merely welding all around the periphery thereof to the shell 21. However, this will preclude the ability to clean the interior of tubes, unless inlet or outlet and piping connections are dismantled and the compression seal assembly is dismantled.

The sealing means, at least in preferred forms, uses only components which are external to the heat exchanger shell to mechanically compress a series of radially expandable rubber-type gaskets between metal tube sheets and shell flanges and thereby simultaneously seal 1) the tube to the tube sheet joints and 2) the tube sheet to the shell joints in a typical shell and tube heat exchanger in such a manner that the gasket retainers limit the compression of the rubber gaskets to avoid all outwardly extruding deformation, facilitates assembly by minimizing or eliminating the need to control the bolt torque, avoids the use of containment straps external to the flanges, and eliminates the need for the retightening of bolts after the initial assembly.

There is provided a seal for a shell and tube heat exchanger having precisely controlled gasket compression by using a combination of compressible gaskets and less compressible peripheral gasket retainers. By using relatively incompressible peripheral flange gasket and tube sheet gasket retainers and compressible, internally contained, flange and tube sheet gasket the degree of compression may be easily controlled. In addition the individual tubes within the heat exchanger can be easily removed for cleaning or replacement, so the shell side of the shell and tube heat exchanger can be mechanically cleaned. It is also possible to remove from the shell, the complete assembly of all tubes with all the support baffles and baffle spacers.

The material used for the tubes does not have to be limited to those which can be brazed, rolled or welded and also the baffles used within the shell and tube heat exchanger to direct the flow of the shell-side fluid could be made of plastic, which otherwise may melt during brazing when using the prior art designs.

**Claims**

1. A shell and tube heat exchanger (1) comprising a shell (2), an extension shell (21), and sealing means for sealing the tubes (3) within the shell (2) so that fluid flowing from the extension shell (21) into the tubes (3) within the shell (2) is separated from the fluid flowing within the shell (2), said sealing means comprising a shell flange (6), an extension shell flange (20), two incompressible tube sheets (11, 16), a tube sheet gasket (14) with holes therethrough for the tubes (3), and two flange gaskets (8, 19), characterised in that a relatively incompressible tube sheet gasket retainer (13) is provided in circumferential arrangement around said tube sheet gasket (14), and in that a flange gasket retainer (7, 18) is provided in circumferential arrangement around each said flange gasket (8, 19) adjacent to the shell flange (6) and extension shell flange (20), respectively, the tube sheet gasket (14) and flange gaskets (8, 19) being thicker than the respective tube sheet gasket retainer (13) and flange gasket retainers (7, 18) whereby upon application of a compressive force the flange gaskets (8, 19) are compressed and radially expanded by an amount limited to the radial inner dimension of the flange gasket retainers (7, 18) and the tube sheet gasket (14) is compressed and radially expanded by an amount limited to the radial inner dimension of the tube sheet gasket retainer (13) so that said gaskets (8, 14, 19) seal the tubes (3) from the shell (2) of the shell and tube heat exchanger and the shell (2) and the extension shell (20) from each other and from the atmosphere.

2. A heat exchanger according to claim 1 characterised in that said gaskets (8, 14, 19) and respective gasket retainers (7, 13, 18) are of unitary construction.

3. A heat exchanger according to claim 1 or 2 characterised in that said gasket retainers (7, 13, 18) have a thickness from 10 to 90% of the thickness of the respective gaskets (8, 14, 19).

4. A heat exchanger according to claim 3 characterised in that said gasket retainers (7, 13, 18) have a thickness from 50 to 70% of the thickness of the respective gaskets (8, 14, 19).

5. A heat exchanger according to any preceding claim characterised in that said gaskets (8, 14, 19) are made of elastomeric material.

6. A heat exchanger according to claim 5 characterised in that said gaskets (8, 14, 19) have a durometer rating of from 20 to 80.

7. A heat exchanger according to claim 6 characterised in that said tube sheet gasket (14) has a durometer rating of from 40 to 50, and said flange gaskets (8, 19) have a durometer rating of from 55 to 65.

8. A heat exchanger according to any preceding claim characterised in that said gasket retainers (7, 13, 18) are made of metal or rigid synthetic materials.

9. A heat exchanger according to any preceding claim characterised in that the compressive force is applied by bolts and nuts (30, 31).

10. A heat exchanger according to any preceding claim characterised in that the tube sheets (11, 16), tube sheet gasket retainer (13) and the flange gasket retainers (7, 18) are made of a material having a durometer rating in excess of 80.

11. A heat exchanger according to any preceding claim characterised in that the gaskets (8, 14, 19), flanges (6, 20), retainers (7, 13, 18) and tube sheets (6, 11) are circular.

12. A heat exchanger according to any of claims 1 to 11 characterised in that the gaskets (8, 14, 19), flanges (6, 20), retainers (7, 13, 18) and tube sheets (6, 11) are non-circular.

13. A heat exchanger according to any preceding claim characterised in that the tubes (3) are non-circular.

**Patentansprüche**

1. Mantel- und Rohre-Wärmetauscher (1), der einen Mantel (2), einen Verlängerungsmantel (21) und eine Dichtungseinrichtung zum Abdichten der Rohre (3) in dem Mantel (2) aufweist, so daß das von der Verlängerungsmantel (21) in die Rohre (3) in dem Mantel (2) strömende Fluide von dem Fluid getrennt ist, das in dem Mantel (2) strömt, wobei die Dichtungseinrichtung einen Mantelflansch (6), einen Verlängerungsmantelflansch (20), zwei inkompressible Rohrplatten (11), 16), eine Rohrplattendichtung (14) mit diese durchsetzende Öffnungen für die Rohre (3) und zwei Dichtungen (8, 19) aufweist, dadurch gekennzeichnet, daß ein relativ ein relativ inkompressibler Rohrplatten-Dichtungstränger (13) in Umfangsanordnung um die Rohrplatte (14) vorgesehen ist, daß ein Flanschdichgungshalter (7, 18) in Umfangsanordnung um die Flanschdichtung (8, 19) in der Nähe des Mantelflansches (6) und des Verlängerungsmantelflansches (20) jeweils vorgesehen ist, und daß die Rohrplattendichtung (14) und die Flanschdichtungen (8, 19) dicker als der zugeordnete Rohrplattendichtungshalter (13) und die Flanschdichtungshalter (7, 18) sind, wobei beim Aufbringen einer Druckkraft die Flanschdichtungen (8, 19) komprimiert und radial um eine Größe expandiert werden, die durch die radial inneren Abmessungen der Flanschdichtungshalter (7, 18) begrenzt ist, und die Rohrplattendichtung (14) komprimiert und radial um eine Größe expandiert wird, die durch die radial inneren Abmessungen der Rohrplattendichtungshalter (13) begrenzt ist, so daß die Dichtungen (8, 14, 19) die Rohre (3) in Bezug zum Mantel (2) des Mantel- und Rohre-Wärmetauschers und des Mantels (2) und des Verlängerungsmantels (20) voeinander und zur Umgebung hin abdichten.

2. Wärmetauscher nach Anspruch 1, dadurch gekennzeichnet, daß die Dichtungen (8, 14, 19) und die zugeordneten Dichtungshalter (7, 13, 18) eine einheitliche Konstruktion haben.

3. Wärmetauscher nach Anspruch 1 oder 2, dadurch gekennzeichnet, daß die Dichtungshalter (7, 13, 18) eine Dicke von 10 bis 90% der Dicke der entsprechenden Dichtungen (8, 14, 19) haben.

4. Wärmetauscher nach Anspruch 3, dadurch gekennzeichnet, daß die Dichtungshalter (7, 13, 18) eine Dicke von 50 bis 70% der Dicke der zugeordneten Dichtungen (8, 14, 19) haben.

5. Wärmetauscher nach einem der vorangehenden Ansprüche, dadurch gekennzeichnet, daß die Dichtungen (8, 14, 19) aus elastomeren Material hergestellt sind.

6. Wärmetauscher nach Anspruch 5, dadurch gekennzeichnet, daß die Dichtungen (8, 14, 19) einen Härtegrad von 20 bis 80 haben.

7. Wärmetauscher nach Anspruch 6, dadurch gekennzeichnet, daß die Rohrplattendichtung (14) einen Härtegrad von 40 bis 50 und die Flanschdichtungen (8, 19) einen Härtegrad von 55 bis 65 haben.

8. Wärmetauscher nach einem der vorangehenden Ansprüche, dadurch gekennzeichnet, daß die Dichtungshalter (7, 13, 18) aus Metall oder einem starren synthetischen Material hergestellt sind.

9. Wärmetauscher nach einem der vorangehenden Ansprüche, dadurch gekennzeichnet, daß die Druckkraft mittels Schrauben und Muttern (30, 31) aufgebracht wird.

10. Wärmetauscher nach einem der vorangehenden Ansprüche, dadurch gekennzeichnet, daß die Rohrplatten (11, 16), die Rohrplattendichtungshalter (13) und die Flanschdichtungshalter (7, 18) aus einem Material hergestellt sind, das einen Härtegrad von größer als 80 hat.

11. Wärmetauscher nach einem der vorangehenden Ansprüche, dadurch gekennzeichnet, daß die Dichtungen (8, 14, 19), die Flansche (6, 20), die Halter (7, 13, 18) und die Rohrplatten (6, 11) kreisförmig sind.

12. Wärmetauscher nach einem der Ansprüche 1 bis 10, dadurch gekennzeichnet, daß die Dichtungen (8, 14, 19), die Flansche (6, 20), die Halter (7, 13, 18) und die Rohrplatten (6, 11) nicht kreisförmig ausgebildet sind.

13. Wärmetauscher nach einem der vorangehenden Ansprüche, dadurch gekennzeichnet, daß die Rohre (3) nicht kreisförmig sind.

**Revendications**

1. Echangeur de chaleur à faisceau tubulaire (1) comportant une enveloppe (2), un prolongement d'enveloppe (21), et des moyens d'étanchéité pour fixer de manière étanche des tubes (3) dans l'enveloppe (2) de façon telle que l'écoulement de fluide à partir du prolongement d'enveloppe (21) dans les tubes (3) situés dans l'enveloppe (2) est séparé de l'écoulement de fluide dans l'enveloppe (2), lesdits moyens d'étanchéité comportant une collerette d'enveloppe (6), une collerette d'extension d'enveloppe (20), deux feuilles tubulaires incompressibles (11, 16), une garniture en feuille tubulaire (14) avec des trous traversants pour les tubes (3), et deux garnitures de collerette (8, 19), caractérisé en ce qu'un logement (13) pour garniture en feuille tubulaire relativement incompressible est prévu selon un agencement circonférentiel autour de la garniture en feuille tubulaire (14), et en ce qu'un logement (7, 18) pour garniture de collerette est prévu selon un agencement circonférentiel autour de chacune des garnitures de collerette (8, 19) adjacente à la collerette d'enveloppe (6) et à la collerette d'extension d'enveloppe (20), repectivement, la garniture en feuille tubulaire (14) et les garnitures de collerette (8, 19) étant respectivement plus épaisses que le logement (13) de garniture en feuille tubulaire et que les logements (7, 18) de garniture de collerette grâce à quoi par l'application d'une force de compression, les garnitures de collerette (8, 19) sont comprimées et élargies radialement d'une valeur limitée à la dimension radiale intérieure des logements de garniture de collerette (7, 18) et la garniture en feuille tubulaire (14) est comprimée et élargie radialement d'une valeur limitée à la radiale intérieure du logement (13) de garniture en feuille tubulaire de façon telle que les garnitures (8, 14, 19) rendent les tubes (3) étanches par rapport à l'enveloppe (2) de l'échangeur à faisceau tubulaire et l'enveloppe (2) et le prolongement d'enveloppe (21) l'un par rapport à l'autre et par rapport à l'atmosphère.

2. Echangeur de chaleur selon la revendication 1, caractérisé en ce que lesdites garnitures (8, 14, 19) et les logements de garniture respectifs (7, 13, 18) sont réalisés en une seule pièce.

3. Echangeur de chaleur selon la revendication 1 ou 2, caractérisé en ce que les logements de garniture (7, 13, 18) ont une épaisseur de 10 à 90% de l'épaisseur des garniture respectives (8, 14, 19).

4. Echangeur de chaleur selon la revendication 3, caractérisé en ce que lesdits logements de garniture (7, 13, 18) ont une épaisseur de 50 à 70% de l'épaisseur des garnitures respectives (8, 14, 19).

5. Echangeur de chaleur selon l'une quelconque des revendications précédentes, caractérisé en ce que les garnitures (8, 14, 19) sont réalisées en matériau élastomère.

6. Echangeur de chaleur selon la revendication 5, caractérisé en ce que les garnitures (8, 14, 19) ont un résultat au duromètre de 20 à 80.

7. Echangeur de chaleur selon la revendication 6, caractérisé en ce que la garniture en feuille tubulaire (41) a un résultat au duromètre de 40 à 50, et les garnitures de collerette (8, 19) ont un résultat au duromètre de 55 à 65.

8. Echangeur de chaleur selon l'une quelconque des revendications précédentes, caractérisé en ce que les logements de garniture (7, 13, 18) sont réalisés en métal ou en matériau synthétique rigide.

9. Echangeur de chaleur selon l'une quelconque des revendications précédentes, caractérisé en ce que la force de compression est appliquée au moyen de boulons et d'écrous (30, 31).

10. Echangeur de chaleur selon l'une quelconque des revendications précédentes, caractérisé en ce que les feuilles tubulaires (11, 16), le logement (13) de garniture en feuille tubulaire et les logements (7, 18) de garniture de collerette sont réalisés en un matériau ayant un résultat au duromètre supérieur à 80.

11. Echangeur de chaleur selon l'une quelconque des revendications précédentes, caractérisé en ce que les garnitures (8, 14, 19), les collerettes (6, 20), les logem,ents (7, 13, 18) et les feuilles tubulaires (6, 11) sont circulaires.

12. Echangeur de chaleur selon l'une quelconque des revendications 1 à 11, caractérisé en ce que les garnitures (8, 14, 19), les collerettes (6, 20), les logements (7, 13, 18) et les feuilles tubulaires (6, 11) sont non circulaires.

13. Echangeur de chaleur selon l'une quelconque des revendications précédentes, caractérisé en ce que les tubes (3) sont non circulaires.

FIG. I

0 176 275

# FIG. 2